# EUROPÄISCHE PATENTANMELDUNG

(11) **EP 0 908 349 A2**
(43) Veröffentlichungstag der Anmeldung: **14.04.1999**
(21) Anmeldenummer: 98118886.5
(22) Anmeldetag: 06.10.1998
(51) Int. Cl.: B60N 2/04

(54) **Verstellmechanik für eine Stufenlose Dreh-Verstellung eines Abtriebs-Wirkteiles**

(30) Priorität: 10.10.1997 DE 19744944
(71) Anmelder: ISE Innomotive Systems Europe GmbH, 51702 Bergneustadt (DE)
(72) Erfinder: Lang, Jozef, 1131 Budapest (HU)
(74) Vertreter: Fuchs Mehler Weiss & Fritzsche

(57) **Zusammenfassung**

Auf vielen Gebieten der Technik ist eine stufenlose, selbsthemmende Dreh-Verstellung einer Vorrichtung notwenig, beispielsweise der Verstellvorrichtung von Fahrzeugsitzen.

Es ist bekannt, diese Verstellvorrichtung mit dem Abtriebs-Wirkteil (3) einer Verstellmechanik für eine stufenlose Drehverstellung des Abtriebs-Wirkteiles, welches selbsthemmend mit einem Hand-Stellrad (9) über eine Welle (2) gekoppelt ist, zu verbinden.

Gemäß der Erfindung ist zwischen dem Abtriebs-Wirkteil (3) und dem Hand-Stellrad (9) eine in beiden Drehrichtungen wirkende Freilauf-Anordnung (1a, 4, 5, 8, 12) zur stufenlosen Feinverstellung des Abtriebs-Wirkteiles (3) bei einer Betätigung des Hand-Stellrades (9) in der Freilauf-Drehrichtung und zur Selbsthemmung des Abtriebs-Wirkteiles (3) gegenüber einer Betätigung in der Gegendrehrichtung vorgesehen.

## Beschreibung

Die Erfindung bezieht sich auf eine Verstellmechanik für eine stufenlose Dreh-Verstellung eines Abtriebs-Wirkteiles, das selbsthemmend mit einem Hand-Stellrad über eine Welle gekoppelt ist.

Eine derartige Verstellmechanik findet auf vielen Gebieten der Technik für stufenlose selbsthemmende Drehverstellungen Anwendung. Vorzugsweise dient sie als selbsthemmende Verstellmechanik für eine stufenlose Verstellvorrichtung von Fahrzeugsitzen. Mit einem entsprechenden Mechanismus verbunden, dient sie dabei in erster Linie zum Neigungsverstellen, d.h. zum Anheben der Vorderkante des Sitzes, zur Höhenverstellung des Sitzes und zum Neigungsverstellen der Rückenlehne des Fahrzeugsitzes.

Es ist bekannt, für derartige stufenlose selbsthemmende Verstellmechaniken Zahnradtriebe mit einer aufwendigen Selbsthemmung vorzusehen.

Durch die DE 36 16 164 A1, die DE 37 41 740 A1, die DE 43 44 225 A1 sowie die EP 0 245 861 B1 sind Verstellmechaniken bekannt geworden, die mittels eines Handhebels schrittweise verstellbar sind. Diese Verstellmechaniken eignen sich jedoch nicht für eine feinfühlige Verstellung und weisen zudem überwiegend zahlreiche komplexe Teile auf, d.h. sie sind teuer in der Herstellung und aufwendig in der Montage. Durch die DE 44 19 789 A1 ist eine weitere manuelle Betätigungsvorrichtung zur Betätigung einer Sitzhöhenverstellung bekannt geworden. Diese manuelle Betätigungsvorrichtung weist einen Freigabehebel zur Losung einer Verriegelungsvorrichtung und einen Betätigungshebel zum Verdrehen einer Betätigungswelle auf. Um die zugehörige, von der Betätigungseinheit separate Sitzhöhen-Verstellvorrichtung zu betätigen, muß zunächst der Freigabehebel gegen den Betätigungshebel gedrückt werden, und sodann der Betätigungshebel verschwenkt werden. Dabei bestimmt die Winkelposition des Betätigungshebels die zugehörige Sitzhöhe. Jede Winkelposition des Betätigungshebels ist genau einer Sitzhöhe zugeordnet. Dies bedeutet, daß der Betätigungshebel mit einer einzigen Verschwenkung von einer Extemposition in die andere Extremposition den gesamten Hub der Sitzhöhen-Verstellvorrichtung abdeckt. Dabei ist im bekannten Fall der Schwenkbereich des Betätigungshebels auf weniger als 90° beschränkt. Dies bedeutet, daß mittels einer Viertelumdrehung der Betätigungswelle eine Sitzhöhen-Verstellung um etwa 5 cm eingestellt werden muß. Für eine solche Verstellung sind hohe Betätigungskräfe erforderlich, die nur durch einen langen Hebelarm verringert werden können. Eine Feineinstellung der Sitzhöhe ist auf diese Weise nur schwer möglich, da eine kleine Winkelverstellung des Betätigungshebels schon eine große Höhenverstellung des Sitzes zur Folge hat. Schließlich ist es auch von Nachteil, daß zur Einstellung der Sitzhöhe zwei Hebel zu betätigen sind, was eine koordinierte Bewegung des Fahers erfordert. Zunächst ist nämlich der Freigabehel zu betätigen, danach, bei betätigtem Freigabehebel, der Betätigungshebel zu verschwenken.

Der Erfindung liegt die Aufgabe zugrunde, die eingangs bezeichnete Verstellmechanik so auszubilden, daß nur wenige Einzelteile notwendig sind und eine einlache, feinfühlige stufenlose, nahezu wartungsfreie Verstellung in beiden Drehrichtungen mit einer sicheren Selbsthemmung ermöglicht wird.

Die Lösung dieser Aufgabe gelingt gemäß der Erfindung dadurch, daß zwischen dem Abtriebs-Wirkteil und dem Hand-Stellrad eine in beiden Drehrichtungen wirkende Freilauf-Anordnung zur stufenlosen Feinverstellung des Abtriebs-Wirkteiles bei einer Betätigung des Hand-Stellrades in der Freilauf-Drehrichtung und zur Selbsthemmung des Abtriebs-Wirkteiles gegenüber einer Betätigung in der Gegendrehrichtung vorgesehen ist.

Die Freilaufanordnung ermöglicht eine einfache, feinfühlige stufenlose Verstellung des Wirkteiles in beiden Drehrichtungen und gewährleistet jeweils in der sperrenden Gegenrichtung eine sichere Selbsthemmung.

Die erfindungsgemäße Verstellmechanik besteht ferner aus wenigen Einzelteilen, ihre Funktion ist einfach und wartungsfrei; ferner kann sie für mehrere verschiedene stufenlose Verstellaufgaben verwendet werden.

Die Freilauf-Anordnung kann auf verschiedene Weise konstruktiv ausgestaltet werden.

Gemaß einer Weiterbildung der Erfindung wird die Freilauf-Anordnung durch einen Nocken-Freilauf mit mindestens zwei gegenüberliegenden, in je einer Richtung verriegelnden Nocken gebildet, die in Wirkeingriff mit dem Hand-Stellrad stehen. Dieser Nocken-Freilauf ermöglicht eine besonders einfache Ausbildung der Freilaufanordnung mit wenigen Teilen bei einer sicheren Selbsthemmung.

Gemäß einer weiteren Ausgestaltung der Erfindung besteht eine spezielle, vorteilhafte Konstruktion des Nocken-Freilaufes darin, daß auf der Welle eine Scheibe befestigt ist, auf der die Nocken gegensätzlich drehbeweglich sowie mittels einer Schließfeder spreizbar angebracht sind, sowie darin, daß ein feststehendes, ein Lager für die Welle bildendes trommelartiges Gehäuse mit einem die Nocken umgreifenden Kranz vorgesehen ist, der eine Innenfläche aufweist, an der bei unbetätigtem Hand-Stellrad die gespreizten Nocken mit einer Wirkfläche in beiden Drehrichtungen kraftschlüssig verriegelt anliegen, sowie darin, daß eine mit dem Hand-Stellrad und der Scheibe in Wirkverbindung stehende Rückstellfeder vorgesehen ist, sowie darin, daß am Hand-Stellrad Öffnungsabsätze ausgebildet sind, die jeweils einem Nocken zugeordnet sind, derart, daß bei einer Drehung des Hand-Stellrades gegen die Federkraft der Rückstellfeder der jeweilige Öffnungsabsatz den Nocken in die Freilauf-Position verdreht.

Die selbstschließende Reibverbindung zwischen der Innenfläche des Kranzes und einem der Nocken verhindert in einer Richtung das Verdrehen der Welle, der darauf befestigten Scheibe und des Abtriebs-Wirkteiles, das vorzugsweise durch ein Zahnrad gebildet wird, dagegen ist die Verstellung in der anderen Richtung entsprechend der Funktion eines Freilaufes frei. Die Schließung in der entgegengesetzten Drehrichtung wird von dem in umgekehrter Richtung eingebauten anderen Nocken durchgeführt. Die Selbsthemmung kann in beiden Richtungen durch ein Verdrehen des Hand-Stellrades gelöst werden, und zwar mit Hilfe des sich darauf befindlichen und zwischen die Nocken greifenden Öffnungsabsatzes, der vorzugsweise durch einen Bolzen gebildet wird. Eei dieser Verdrehung des Hand-Stellrades wird die in der Drehrichtung des Öffnungsabsatzes liegende Nocke aus ihrer Schließstellung herausbewegt. Dadurch wird die Verstellmechanik in dieser Richtung zum Freilauf. Die zwischen dem Hand-Stellrad und der Scheibe befindliche vorgespannte Rückstellfeder gewährleistet, daß die Scheibe und das Hand-Stellrad zueinander wieder in ihre alte Grundstellung zurückgehen.

Gemäß einer Weiterbildung der Erfindung sind zwei symmetrisch versetzt zueinander auf der Scheibe angeordnete Nockenpaare mit je einer Schließfeder vorgesehen.

Eine derartige Ausbildung hat den Vorteil, daß in der Grundstellung des Hand-Stellrades die auftretenden Kräfte kein Biegemoment auf die zentrale Welle ausüben. Ein weiterer Vorteil besteht darin, daß sich die aus den Maßtoleranzen der Einzelteile ergebenden Fehler untereinander ausgleichen, wodurch die Funktion der Verstellmechanik zuverlässiger ist.

Weitere Ausgestaltungen und Vorteile der Erfindung ergeben sich anhand der Beschreibung der beiden in den Zeichnungen dargestellten Ausführungsformen der Erfindung.

Es zeigen:
- Figur 1: einen Schnitt durch eine erste Ausführungsform der erfindungsgemäßen Verstellmechanik,
- Figur 2: einen Schnitt genommen entlang der Linie A-A in Figur 1,
- Figur 3: einen Schnitt, genommen entlang der Linie B-B in Figur 1, und
- Figur 4: einen Schnitt quer zur Welle einer zweiten Ausführungsform der erfindungsgemäßen Verstellmechanik mit zwei Nockenpaaren.

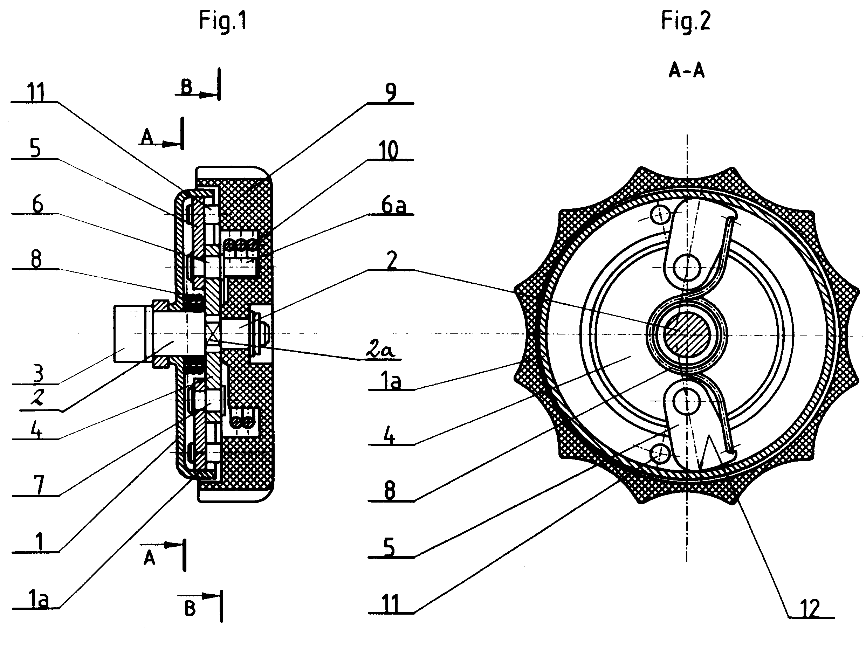

Die Figuren 1 bis 3 zeigen - im Ruhezustand - eine erste Ausführungsform der erfindungsgemäßen Verstellmechanik für eine stufenlose Dreh-Verstellung eines Abtriebs-Wirkteiles, welches selbsthemmend mit einem Hand-Stellrad 9 über eine Welle 2 gekoppelt ist. Das Abtriebs-Wirkteil ist im Ausführungsbeispiel ein Zahnrad 3, welches einstückig mit der Welle 2 ausgebildet, oder als separates Teil mit der Welle 2 verbunden ist. Dieses Zahnrad 3 steht (nicht dargestellt) in Wirkeingriff mit einem Gegezahnard, oder einem Zahnsegmentbogen oder einer Zahnstange einer zu betätigenden Verstellvorrichtung. Diese Verstellvorrichtung ist vorzugsweise eine solche für Fahrzeugsitze in einem Kraftfahrzeug, insbesondere zum Neigungs- und Höhenverstellen von Sitzkissen sowie zur Neigungsverstellung der Rückenlehne.

Anstelle des Zahnrades 3 als Abtriebs-Wirkteil kann auch abtriebsseitig an der Welle 2 ein Hebel vorgesehen sein der in Wirkverbindung mit einer Hebelmechanik an der Verstellvorrichtung steht.

Im dargestellten Ausführungsbeispiel besitzt die Welle 2 einen Vierkant 2a. Diese Ausführungsform erleichtert auf einfache Weise eine sichere Befestigung eines Teiles auf der Welle.

Auf der Welle 2 ist an dem zum Abtrieb entgegengesetzten Ende das Hand-Stellrad 9 gelagert. Mit der Welle 2 ist im Bereich des Vierkantes 2a eine Scheibe 4 fest verbunden, an der Zwei Nocken 5 symmetrisch außermittig mittels Bolzen 6, 7 gegensinnig drehbeweglich angebracht sind.

Die Verstellmechanik weist ein trommelartiges Gehäuse 1 mit einem Innenkranz 1a, der die Nocken 5 übergreift und eine Innenfläche 12 besitzt, auf. Dieses trommelartige Gehäuse 1 ist ortsfest angeordnet und bildet ein weiteres Lager für die Welle 2. Es ist ferner eine Schließfeder 8 vorgesehen, die teilweise um die Welle 2 gewunden ist, und mit ihren Enden in Ausnehmungen der Nocken 5 aufgenommen ist. Diese Schließfeder 8 drückt die Wirkflächen der Nocken 5 trommelbremsartig gegen die Innenfläche 12 des Kranzes 1a des trommelartigen Gehäuses 1 und bewirkt so eine Selbsthemmung der Verstellmechanik, das heißt, von dem abtriebsseitigen Zahnrad 3 her ist die Welle 2 unter Aufwand üblicher Kräfte nicht zu verdrehen. Die Welle 2 ist damit in beiden Drehrichtungen verriegelt.

Das Hand-Verstellrad 9 weist ferner im Bereich der Nocken 5 angebrachte Öffnungsansätze, im Ausführungsbeispiel in Form von Bolzen 11, auf, die bei Drehung des Hand-Verstellrades in Wirkeingriff mit den Nocken 5 bringbar sind, derart, daß sie die Nocken über die Bolzen 6, 7 außer Eingriff mit der Innenfläche 12 des Kranzes 1a des trommelartigen Gehäuses 1 drehen und damit einen Freilauf ermöglichen.

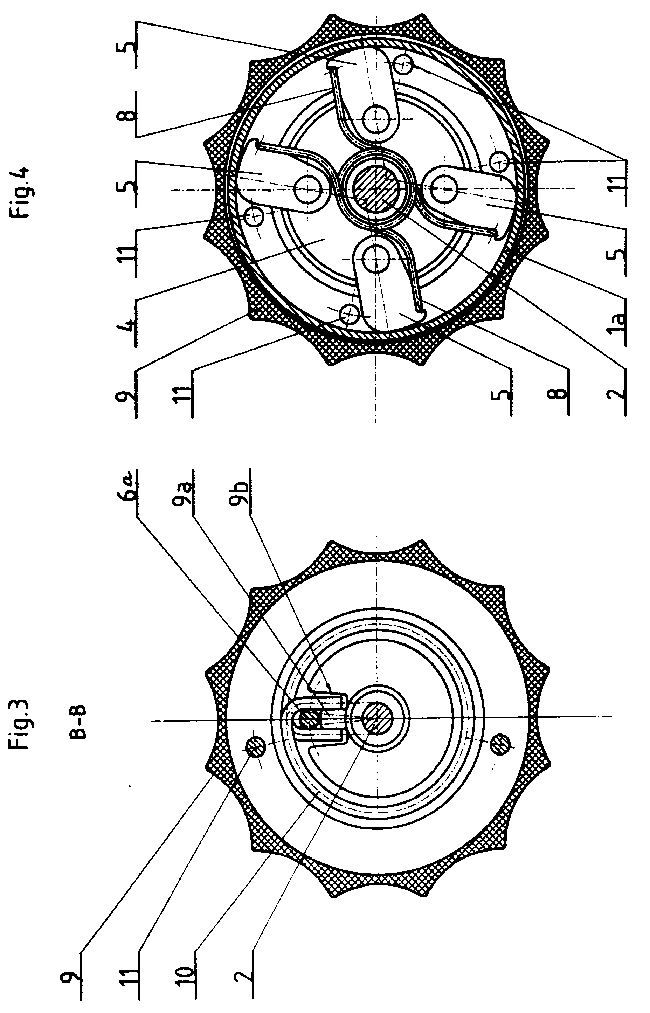

An der Scheibe 4 ist weiterhin auf Höhe des Bolzens 6 ein Mitnehmerbolzen 6a angebracht, der in eine Ausnehmung im Hand-Verstellrad 9 hineinragt, in der eine weitere Feder 10 aufgenommen ist, und die einen Anschlagabsatz 9a sowie eine Anschlagfläche 9b aufweist. Die Enden der Feder 11 sind dabei, wie der Schnitt B-B nach Figur 3 zeigt, abgekröpft, wobei die Abkröpfungen den Mitnehmerbolzen 6a mitnehmerartig umfassen.

Die Verstellmechanik kann mittels des Hand-Verstellrades 9 in beiden Drehrichtungen betätigt werden. Dazu wird das Hand-Verstellrad, wie aus Figur 3 zu ersehen ist, gegen die Feder 10 verdreht, und zwar in bezug zu der auf der Welle 2 befestigten Scheibe 4 bis zum entsprechenden Maß der auf dem Hand-Verstellrad geformten Anschlagfläche 9b. Währenddessen wird der sich auf dem Hand-Verstellrad befindliche Öffnungsanschlag 11 die in Richtung der Verschiebung kommenden Nocken 5 lösen, und zwar damit, daß sie deren Auflage auf der Innenfläche 12 des Kranzes 1 des trommelartig gestalteten Gehäuses 1 aufhebt, wobei der in der anderen Drehrichtung schließende Nocken auf der Innenfläche 12 des Kranzes 1a schleift. Die so gelöste Verstellmechanik kann beliebig in der geöffneten Richtung verdreht werden (Freilauf), dabei bleibt sie in der entgegengesetzten Richtung durchgehend verriegelt. Der Nocken 5 bleibt so lange geöffnet, bis die Feder 10 des Hand-Verstellrades dieses nicht in seine Grundstellung zurückstellt. Beim Loslassen des Hand-Verstellrades 9 wird die Feder 10 mit Hilfe des auf der Scheibe 4 angebrachten Mitnehmerbolzen 6a und dem auf dem Hand-Verstellrad 9 ausgebildeten Anschlagabsatz 9a, das Hand-Verstellrad 9 und dessen Öffnungsansatz 11 in bezug zur Scheibe 4 in die Ruhelage gemäß Figuren 1 bis 3 zurückstellen. Dadurch wird die Verdrehung des Nockens 5 um den Bolzen 6 bzw. 7 frei und die Schließfeder 8 drückt die Nocken 5 wieder gegen die Innenfläche 12 des Kranzes 1a des trommelartig gestalteten Gehäuses 1. Damit geht die Verstellmechanik wieder in ihren Ruhezustand, d.h. in ihren, in beiden Richtungen verriegelten Zustand, zurück. Die Lösung der Verriegelung, sowie die Betätigung der Verstellmechanik ist in beiden Richtungen gleich.

Die Figur 4 zeigt eine zweite Verwirklichungsmöglichkeit der erfindungsgemäßen Verstellmechanik. In diesem Fall dienen zwei Nockenpaare 5 zur Verriegelung der Scheibe 4. Diese Anordnung gewährleistet eine zuverlässigere Verriegelung als bei der Ausführungsform nach Figur 1. Und zwar dadurch, daß einerseits parallel zwei Schließelemente wirksam sind und andererseits sich die aus den Maßtoleranzen der Einzelteile ergebenden Fehler ausgleichen. Weiterhin heben sich durch die symmetrische Anordnung die auf die zentrale Welle 2 einwirkenden Kräfte wegen der symmetrischen Belastung teilweise einander auf und vermindern damit die Biegebeanspruchung der zentralen Welle 2. Das Lösen der Verstellmechanik in den Freilauf erfolgt mit Hilfe der am Handrad 9 angebrachten Öffnungsansätze, wie bereits anhand der Figur 2 beschrieben wurde.

Zweckmäßig sind die in den Figuren 1 und 4 dargestellten Verstellmechaniken als vormontierte Einheit ausgebildet, die nachträglich an den Verstellmechanismus des Sitzes im Falle einer Anwendung bei Fahrzeugsitzen anschließbar sind.

### Bezugszeichen:

- 1: Gehäuse
- 1a: Kranz
- 2: Welle
- 3: Abtriebs-Zahnrad
- 4: Scheibe
- 5: Nocken
- 6: Bolzen I
- 6a: Mitnehmerholzen
- 7: Bolzen II
- 8: Schließfeder
- 9: Handrad
- 9a: Anschlagabsatz
- 9b: Anschlagfläche
- 10: Feder
- 11: Öffnungsansatz(-bolzen)
- 12: Innenfläche des Kranzes (1a) des trommelartig gestalteten Gehäuses (1)

## Patentansprüche

1. Verstellmechanik für eine stufenlose Dreh-Verstellung eines Abtriebs-Wirkteiles (3), das selbsthemmend mit einem Hand-Stellrad (9) über eine Welle (2) gekoppelt ist, dadurch gekennzeichnet, daß zwischen dem Abtriebs-Wirkteil (3) und dem Hand-Stellrad (9) eine in beiden Drehrichtungen wirkende Freilauf-Anordnung (1a, 4, 5, 8, 12) zur stufenlosen Feineinstellung des Abtriebs-Wirkteiles (3) bei einer Betätigung des Hand-Stellrades (9) in der Freilauf-Drehrichtung und zur Selbsthemmung des Abtriebs-Wirkteiles (3) gegenüber einer Betätigung in der Gegendrehrichtung vorgesehen ist.

2. Verstellmechanik nach Anspruch 1, dadurch gekennzeichnet, daß die Freilaufanordnung (1a, 4, 5, 8, 12) durch einen Nocken-Freilauf mit mindestens zwei gegenüberliegenden, in je einer Richtung verriegelnden Nocken (5) gebildet ist, die in Wirkeingriff mit dem Hand-Stellrad (9) stehen.

3. Verstellmechanik nach Anspruch 2, dadurch gekennzeichnet, daß auf der Welle (2) eine Scheibe (4) befestigt ist, auf der die Nocken (5) gegensätzlich drehbeweglich sowie mittels einer Schließfeder (8) spreizbar angebracht sind, daß ein feststehendes, ein Lager für die Welle (2) bildendes trommelartiges Gehäuse (1) mit einem die Nocken (5) umgreifenden Kranz (1a) vorgesehen ist, der eine Innenfläche (12) aufweist, an der bei unbetätigtem Hand-Stellrad (9) die gespreizten Nocken (5) mit einer Wirkfläche in beiden Drehrichtungen kraftschlüssig verriegelt anliegen, daß eine mit dem Hand-Stellrad (9) und der Scheibe (4) in Wirkverbindung stehende Rückstellfeder (10) vorgesehen ist, und daß am Hand-Stellrad (9) Öffnungsabsätze (11) ausgebildet sind, die jeweils einem Nocken (5) zugeordnet sind, derart, daß bei einer Drehung des Hand-Stellrades (9) gegen die Federkraft der Rückstellfeder (10) der jeweilige Öffnungsabsatz (11) den zugeordneten Nocken (5) in die Freilauf-Position verdreht.

4. Verstellmechanik nach Anspruch 3, dadurch gekennzeichnet, daß zwei symmetrisch versetzt zueinander, auf der Scheibe (4) angeordnete Nockenpaare (5) mit je einer Schließfeder (8) vorgesehen sind.

5. Verstellmechanik nach einem der Ansprüche 1 bis 4, dadurch gekennzeichnet, daß das Abtriebs-Wirkteil ein Abtriebs-Zahnrad (3) ist.

6. Verstellmechanik nach Anspruch 5, dadurch gekennzeichnet, daß das Abtriebs-Zahnrad (3), die Scheibe (4) und das Hand-Stellrad (9) auf derselben Weile (2) sitzen.

7. Verstellmechanik nach einem der Ansprüche 1 bis 6, dadurch gekennzeichnet, daß das Hand-Stellrad (9) in beiden Drehrichtungen beliebig umdrehend ausgestaltet ist.

8. Verstellmechanik nach einem der Ansprüche 1 bis 7, dadurch gekennzeichnet, daß sie als vormontierte Einheit ausgebildet ist, die nachträglich an den Verstellmechanismus des zu betätigenden Teiles anschließbar ist.
